# EUROPEAN PATENT SPECIFICATION

(11) **EP 4 163 045 B1**
(45) Date of publication and mention of the grant of the patent: **02.09.2026**
(21) Application number: 21823049.8
(22) Date of filing: 02.06.2021
(51) Int. Cl.: B23K 26/00, B23K 26/21, B23K 26/04, B23K 26/03, B23K 26/08

(54) **LASER WELDING DEVICE AND LASER WELDING METHOD**
LASERSCHWEISSVORRICHTUNG UND LASERSCHWEISSVERFAHREN
DISPOSITIF DE SOUDAGE AU LASER ET PROCÉDÉ DE SOUDAGE AU LASER

(30) Priority: 08.06.2020 JP 2020099662
(43) Date of publication of application: 12.04.2023
(73) Proprietor: Panasonic Intellectual Property Management Co., Ltd., Osaka-shi, Osaka 540-6207 (JP)
(72) Inventor: KAWAI, Shunsuke, Osaka-shi, Osaka 540-6207 (JP); WANG, Jingbo, Osaka-shi, Osaka 540-6207 (JP); SUGIYAMA, Tsutomu, Osaka-shi, Osaka 540-6207 (JP); SHIBATA, Kenzo, Osaka-shi, Osaka 540-6207 (JP); ISHIGURO, Masashi, Osaka-shi, Osaka 540-6207 (JP)
(74) Representative: Novagraaf International SA
(86) International application number: PCT/JP2021/020992
(87) International publication number: WO 2021/251239

(56) References cited:
- EP-A2- 1 118 420
- EP-B1- 2 611 565
- JP-A- 2003 103 387
- JP-A- 2007 014 974
- JP-A- 2017 047 454
- JP-A- H08 215 869
- JP-A- H1 052 779
- US-B1- 6 399 915

## Description

### TECHNICAL FIELD

The present disclosure relates to a laser welding device and a laser welding method.

### BACKGROUND ART

The document EP1118420A2 discloses an inclined beam lap welding. The document EP2611565B1 (which forms the basis for the preamble of the independent claims) relates to a method for analyzing data generated by a sensor measuring the optical emission of the plasma generated in a welding area. Patent Literature 1 discloses a laser machining device that includes a machining head for illuminating a workpiece with laser light and a moving mechanism for moving the workpiece relatively to the machining head, and that cuts the workpiece. This laser machining device includes: a light detection unit configured to detect a spatial distribution of the light emitted from the point being machined on a workpiece, in at least two directions, while the point is being irradiated with the laser light; a signal processing unit configured to calculate a ratio of the signal intensity detected in a first direction with respect to that detected in a second direction; a storage unit configured to store therein the ratio together with a machining condition when the laser machining is being performed; and a determination unit configured to determine pass or fail of the quality of machining, by comparing the ratio acquired during the actual laser machining with a reference ratio registered in the storage unit. The light detection unit includes a plurality of optical sensors disposed around the optical axis of the laser light, on the side of the workpiece that is irradiated with the laser light.

### Citation List

### Patent Literature

PTL 1: Unexamined Japanese Patent Publication No. 2011-206806

### SUMMARY OF THE INVENTION

### Technical problem

The present disclosure provides a laser welding device and a laser welding method that suppress deterioration in the quality of laser welding by getting a grasp of the amount by which the focal point has shifted during laser welding.

### Solution to problem

The present disclosure provides a laser welding device including: a laser oscillator with which an incoming end of a fiber is connected; a welding head that is connected to an outgoing end of the fiber and that performs laser welding while irradiating workpiece with the laser light by guiding the laser light from the laser oscillator to the workpiece via the fiber; a sensor that detects, during the laser welding, an intensity of plume light that is based on the laser welding, the plume light being emitted from a welded position at which the workpiece is irradiated with the laser light; and a controller that controls a height of the welding head based on a detection output from the sensor, the height being a height in a direction parallel with a direction that the laser light is emitted.

The present disclosure also provides a laser welding method comprising: performing laser welding while irradiating a workpiece with laser light by causing a welding head to guide the laser light emitted from a laser oscillator with which an incoming end of a fiber is connected, to the workpiece, the laser light being emitted via an outgoing end of the fiber; detecting, during the laser welding, the plume light being emitted an intensity of plume light that is based on the laser welding, from a welded position at which the workpiece is irradiated with the laser light; and controlling a height of the welding head based on a detection output from the sensor, the height being a height in a direction parallel with a direction that the laser light is emitted.

### Advantageous effects of invention

According to the present disclosure, it is possible to get a grasp of the amount by which a focal point has shifted during laser welding, and to suppress deterioration in the quality of laser welding.

### BRIEF DESCRIPTION OF THE DRAWINGS

Fig. 1 is a diagram illustrating a schematic configuration example of a laser welding device according to a first exemplary embodiment.
Fig. 2 is a diagram illustrating laser light with which a workpiece is irradiated, and plume light emitted from the welded position.
Fig. 3A is a schematic diagram illustrating a relationship between a molten pool and a keyhole formed on the workpiece, and a focal position of laser light.
Fig. 3B is a schematic diagram illustrating a relationship between a molten pool and a keyhole formed in the workpiece and a focal position of laser light.
Fig. 4 is a diagram illustrating an example of a table specifying a correspondence relationship between the focal position of laser light and a penetration depth in the workpiece.
Fig. 5 is a diagram illustrating an example of a plume light intensity distribution with respect to the focal position of laser light on the workpiece.
Fig. 6 is a flowchart illustrating an example of a first operation sequence of the laser welding device according to the first exemplary embodiment.
Fig. 7 is a flowchart illustrating an example of a second operation sequence of the laser welding device according to the first exemplary embodiment.

### DESCRIPTION OF EMBODIMENT

### (Background of Present Disclosure)

In Patent Literature 1, because the spatial distributions of the light emitted from the point being machined on the workpiece are detected in a plurality of directions, as the workpiece is being irradiated with the laser light, there is a possibility that a calculation accuracy of the ratio between the signal intensities in the respective directions may go through a variation due to the effect of the changes in a surrounding environment during the time when the laser welding is carried out, for example. In such a case, the quality of laser welding could become unstable.

In addition, in laser welding using high-output laser light, a rise in the temperature may cause expansion of a condenser lens that is incorporated inside the machining head, and such expansion may result in a shift in the incident angle of the laser light, or a change in the refractive index of the condenser lens (thermal lens effect). In such a case, the focal distance of the laser light emitted from the machining head changes, and the focal point at the welded position, which is the initial focal point, becomes shifted. Therefore, the energy density distribution of the laser light changes, so that the quality of the laser welding may deteriorate, and the weld may become defective. For example, the width of the weld bead may become unstable, or the penetration depth of the workpiece may become insufficient. Possibly, weld spatter may be generated during laser welding. In order to avoid such situations, additional working hours (takt time) are required to do tasks such as reviewing the laser welding conditions and carrying out the work for correcting the laser welding (repair welding) on the welding site.

Therefore, explained in the following exemplary embodiment is an example of a laser welding device and a laser welding method for getting a grasp of the amount by which the focal point has shifted during the laser welding, without increasing working hours for the laser welding, and for suppressing deterioration in the quality of the laser welding.

An exemplary embodiment specifically disclosing the laser welding device and the laser welding method according to the present disclosure will now be explained in detail with reference to some drawings, as appropriate. It is noted that descriptions in more details than necessary are sometimes omitted. For example, detailed explanations on the matters that are already well known, and redundant explanations about the configurations that are substantially identical will be sometimes omitted. This is to avoid the unnecessary redundancy in the description below, so as to make the description easier to understand for those skilled in the art. Note that, the appended drawings and the following descriptions are provided for those skilled in the art to fully understand the present disclosure, and are not intended to limit the subject matter set forth in the claims in any way.

### [Configuration of Laser Welding Device]

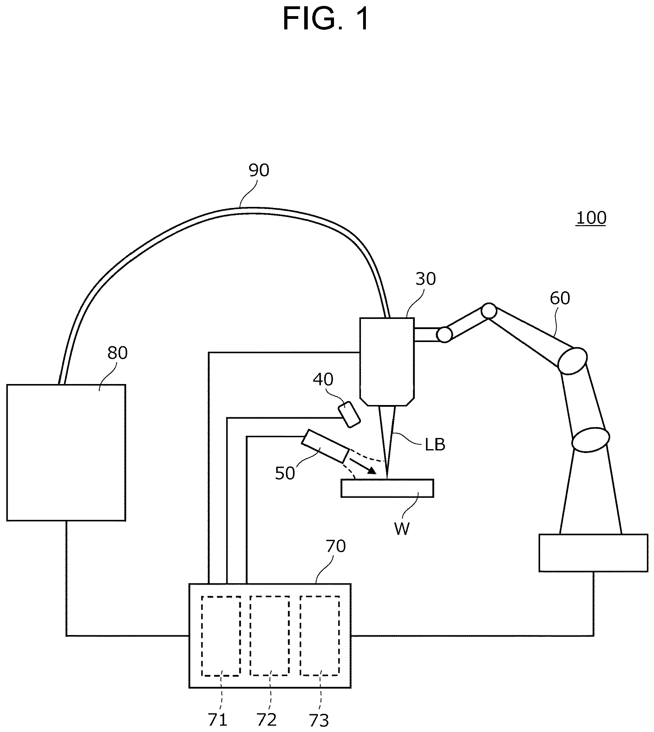

Fig. 1 is a diagram illustrating a schematic configuration example of a laser welding device 100 according to a first exemplary embodiment. Laser welding device 100 includes laser oscillator 80, controller 70, optical fiber 90, welding head 30, sensor 40, shielding gas supplying device 50, and manipulator 60.

Laser oscillator 80 is a laser light source that generates laser light LB by receiving a power supply from a power source (not illustrated). Laser oscillator 80 may include a single laser light source or may include a plurality of laser modules. In the latter case, laser oscillator 80 couples rays of laser light emitted from the plurality of respective laser modules, and output the resultant light as laser light LB.

The laser light source or the laser modules used in laser oscillator 80 is selected appropriately based on a material of workpiece W as an object to be welded, a shape of a welded portion, and the like. For example, a fiber laser, a disk laser, or an yttrium aluminum garnet (YAG) laser may be used as the laser light source. In such a case, the wavelength of laser light LB is set to a range between 1000 nm and 1100 nm. The semiconductor laser may also be used as the laser light source or the laser module. In such a case, the wavelength of laser light LB is set to a range of 800 nm to 1000 nm. A visible-light laser may also be used as the laser light source or the laser module. In such a case, the wavelength of laser light LB is set to a range of 400 nm to 800 nm.

Optical fiber 90 as an example of a fiber has a first end side (incoming end) optically coupled to laser oscillator 80, and the second end side (outgoing end) optically coupled to welding head 30, has a core (not illustrated) at the axial center, and is provided with a first cladding (not illustrated) coaxially with the core, in a manner kept contact with the outer circumferential surface of the core.

Each of the core and the first cladding contains quartz as a main component, and the core has a higher the refractive index than that of the first cladding. Thus, laser light LB generated in laser oscillator 80 becomes incident on the incoming end of optical fiber 90 and propagates through the core toward the outgoing end. A film or a resin-based protective layer (neither of which is illustrated) for mechanically protecting optical fiber 90 is provided on the outer circumferential surface of the first cladding.

Welding head 30 is attached to the outgoing end of optical fiber 90, and illuminates workpiece W with laser light LB passed through optical fiber 90. In this manner, workpiece W is laser-welded. Welding head 30 is configured to illuminate workpiece W with laser light LB, while scanning laser light LB two dimensionally or three dimensionally, and includes an optical scanning mechanism for scanning laser light LB. Welding head 30 also includes a focal position adjustment mechanism (not illustrated) for changing the focal position of laser light LB emitted toward workpiece W.

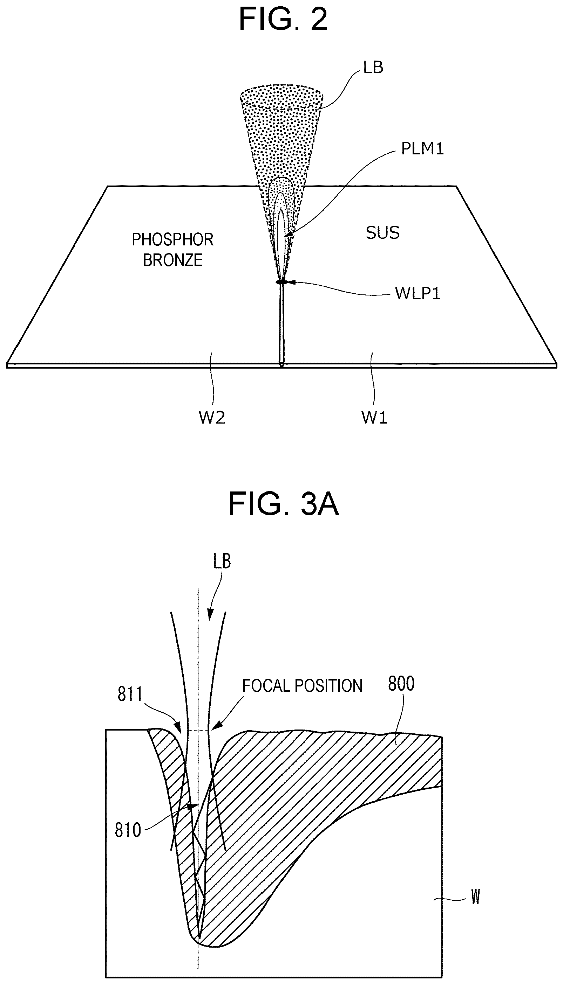

Sensor 40 includes a light receiver (photosensor), and detects the intensity of plume light PLM1 (see Fig. 2) emitted from the welded position (for example, the surface of workpiece W) at which workpiece W is irradiated with laser light LB output from welding head 30 during the laser welding. Sensor 40 is disposed near welding head 30. This is because plume light PLM1 tends to be emitted upwards from the welded position toward welding head 30, as will be explained later with reference to Fig. 2. In this manner, sensor 40 can detect the intensity of plume light PLM1 accurately.

Plume light PLM1 will now be explained with reference to Fig. 2.

Fig. 2 is a diagram illustrating laser light LB with which workpiece W is irradiated, and plume light PLM1 emitted from welded position WLP1. As an example of laser welding, Fig. 2 illustrates joining of SUS (that is, stainless steel W1) and phosphorous bronze W2, as workpieces W. As workpieces W to be laser-welded (stainless steel W1, phosphorous bronze W2) are irradiated with laser light LB, the workpieces W at the welded position being irradiated gradually start to melt. In the example of Fig. 2, by being irradiated with laser light LB, stainless steel W1 and phosphorous bronze W2, both of which are metals, are caused to melt. As the melting takes place over time, metal particles (molecules) making up workpieces W transition to a plasma state, and light is emitted as plume light PLM1. Sensor 40 receives plume light PLM1, detects the intensity of plume light PLM1, and transmits the intensity to controller 70.

Shielding gas supplying device 50 includes, for example, a plurality of gas cylinders and a plurality of valves (not illustrated). At least one valve is provided to each of the gas cylinders. Control unit 71 in controller 70 controls each of the valves connected to the respective gas cylinders to open and to close. In the gas cylinders, the same type of shielding gas may be sealed, or different types of shielding gas may be sealed. Shielding gas supplying device 50 supplies shielding gas toward workpiece W, under the control of controller 70. Although not illustrated in Fig. 1, sensor 40 may be disposed on the same line as shielding gas supplying device 50 in the direction that laser light LB is emitted. In this manner, sensor 40 can accurately detect the intensity of plume light PLM1 from the welded position on the workpiece W where the shielding gas is sprayed and there is no obstacle such as spatter.

Controller 70 includes control unit 71, storage unit 72, and display unit 73. Controller 70 controls laser oscillation of laser oscillator 80. Specifically, controller 70 controls the laser oscillation by supplying signals for controlling an output current, on-time and an off-time, and the like, to a power supply (not illustrated) connected to laser oscillator 80. Furthermore, controller 70 controls driving of optical scanning mechanism (not illustrated) and focal position adjustment mechanism (not illustrated) included in welding head 30, in accordance with the description included in the selected laser welding program. In addition, controller 70 controls the operations of shielding gas supplying device 50 and manipulator 60, respectively.

Storage unit 72 stores therein the laser welding program. Storage unit 72 may be provided internal of controller 70 as illustrated in Fig. 1, or may be provided external of controller 70 and configured to exchange data with controller 70. Storage unit 72 stores therein data establishing an association between a focal position of laser light LB and a penetration depth of workpiece W, and the material of workpiece W (see Fig. 2), as will be described later in detail.

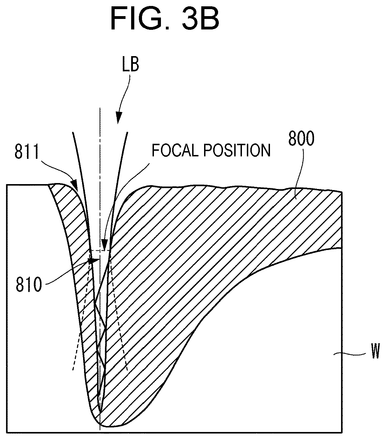

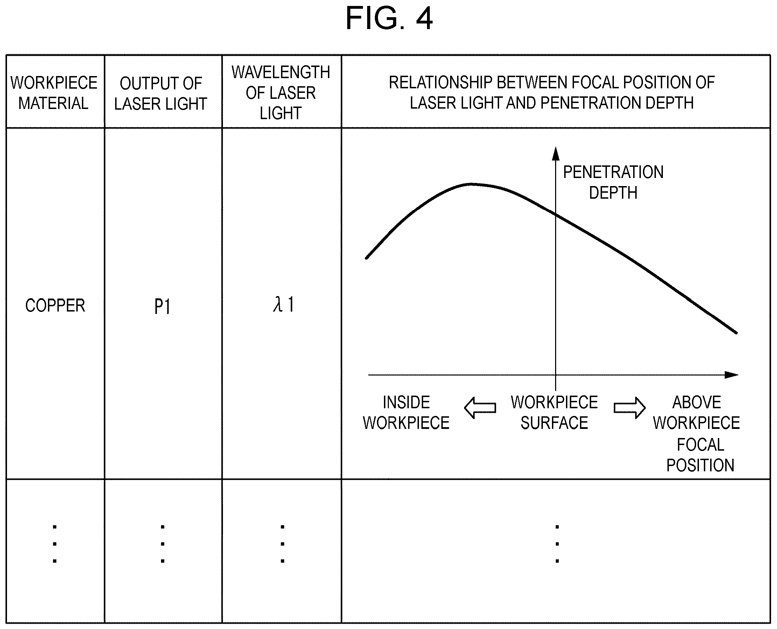

Figs. 3A and 3B are schematic diagrams illustrating a relationship between a molten pool and a keyhole formed in the workpiece W, and the focal position of laser light LB. Fig. 4 is a diagram illustrating an example of a table specifying a correspondence relationship between the focal position of laser light LB and a penetration depth in workpiece W. Fig. 3A illustrates an example in which the focal point of laser light LB is positioned near the surface of workpiece W. Fig. 3B illustrates an example in which the focal point of laser light LB is positioned internal of workpiece W.

In general, when workpiece W made of a metal is laser-welded, a portion irradiated with laser light LB is heated and becomes weld-penetrated, and molten pool 800 is formed, as illustrated in Fig. 3A. In the portion irradiated with laser light LB, a material constituting molten pool 800 evaporates intensely, and its counterforce forms keyhole 810 inside molten pool 800.

Once keyhole 810 is formed, most of laser light LB goes into keyhole 810, by being reflected on the inner wall surface of keyhole 810 a plurality of times, and is absorbed by molten pool 800. By allowing laser light LB to be reflected repeatedly on the inner wall surface of keyhole 810, it is possible to improve the absorptance by which laser light LB is absorbed by molten pool 800, and the amount of heat input to workpiece W is increased, so that the penetration depth is also increased. Part of laser light LB is reflected on the keyhole wall near the opening of keyhole 810, and laser light LB is reflected to the outside without going into keyhole 810 and ends up as a loss, although the amount is small and varies depending on the material of workpiece W or the welding condition.

Furthermore, because keyhole 810 is an open space extending between opening 811 of keyhole 810 formed on the surface of molten pool 800 and internal of molten pool 800, as illustrated in Fig. 3B, when the focal position of laser light LB is moved from the surface of workpiece W in such a manner that laser light LB reaches the internal, specifically, internal of keyhole 810, the power density of laser light LB with which the inner wall surface of keyhole 810 is irradiated is increased, and the amount of light absorbed by molten pool 800 becomes increased, so that the penetration depth can be increased compared with that in the example illustrated in Fig. 3A. Furthermore, when the focal position of laser light LB reaches internal of keyhole 810, it is possible to increase the size of opening 811 of keyhole 810, compared with that in the example illustrated in Fig. 3A. In this manner, laser light LB is allowed to reach internal of keyhole 810 more easily. When the focal position of laser light LB is positioned between the surface of workpiece W and the internal, laser light LB having converged near opening 811 of keyhole 810 goes into keyhole 810, and a limited amount of laser light LB is reflected on the keyhole wall near the opening of keyhole 810, and molten pool 800 absorbs a larger amount of light. This also results in an increase in the penetration depth.

When the focal position of laser light LB moves upwards with respect to the surface of the workpiece W as a reference, that is, to the external of the workpiece W, the penetration depth of the workpiece W becomes shallower. By contrast, the penetration depth of workpiece W becomes deeper as the focal position of laser light LB is moved downwards with respect to the surface of workpiece W as a reference, that is, toward a predetermined position internal of workpiece W. When the focal position of laser light LB moves further downwards into workpiece W than the predetermined position, the power density of laser light LB on the surface of workpiece W drops, and the amount of heat input to workpiece W at the initial stage of formation of molten pool 800 become reduced. Hence, the penetration depth becomes even shallower.

In the manner described above, by moving the focal position of laser light LB from the surface to the predetermined position internal of the workpiece W so that the laser light reaches internal of keyhole 810, it is possible to deepen the penetration depth of workpiece W.

The shape of the curve illustrated in Fig. 4 changes depending on the material of workpiece W and the output of laser light LB. Therefore, storage unit 72 stores therein a penetration depth in workpiece W in a manner associated with a focal position of laser light LB, a material of workpiece W, an output of laser light LB, and a wavelength of laser light LB, as data in a table format. To facilitate understanding of the explanation of Fig. 4, the change in penetration depth of workpiece W with respect to the focal position of laser light LB is illustrated as a graph. However, in reality, each plot curve illustrated in Fig. 4 is associated in a data format, with the material and the like of workpiece W.

When workpiece W is to be laser-welded, by changing the focal position of laser light LB based on the shape of the welded portion of workpiece W and the data illustrated in Fig. 4, it is possible to perform the laser welding in a manner suitable for the shape of the welded portion, and to enhance the joint strength of workpieces W.

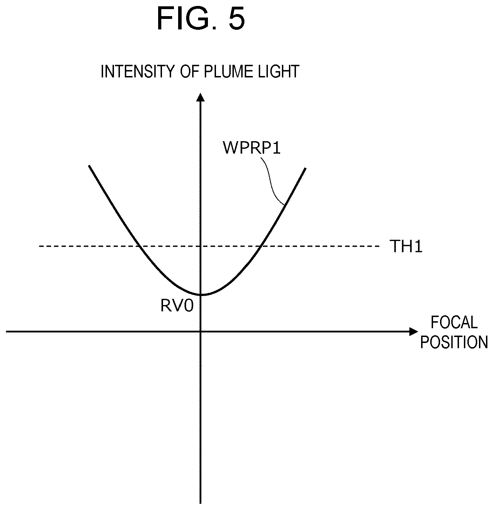

In addition, the storage unit 72 stores therein characteristic data WPRP1 (see Fig. 5) indicating an intensity of plume light PLM1 with respect to a focal position of laser light LB, in a manner associated to each type of workpiece W.

Characteristic data WPRP1 will now be explained with reference to Fig. 5.

Fig. 5 is a diagram illustrating an example of a plume light intensity distribution with respect to a focal position of laser light LB on workpiece W. The horizontal axis in Fig. 5 represents the focal position of laser light LB (see Fig. 3A or 3B), and the vertical axis in Fig. 5 represents the intensity of plume light PLM1. The intensity of plume light PLM1 changes substantially quadratically with respect to the focal position of laser light LB. TH1 denotes a threshold value specified in advance correspondingly to workpiece W. Characteristic data WPRP1 includes data indicating a characteristic that changes substantially quadratically with respect to the focal position, and threshold value TH1 in a manner associated to each other. Characteristic data WPRP1 is not limited to the characteristic illustrated in Fig. 5, and may include a different characteristic depending on the material of workpiece W that is the object to be laser-welded.

As illustrated in Fig. 5, when the focal position is zero (that is, when the surface of workpiece W is being irradiated with laser light LB, as illustrated in Fig. 3A, for example), workpiece W is being irradiated with laser light LB most appropriately, with workpiece W being deeply penetrated, and minimum intensity RV0 is being detected as the intensity of plume light PLM1.

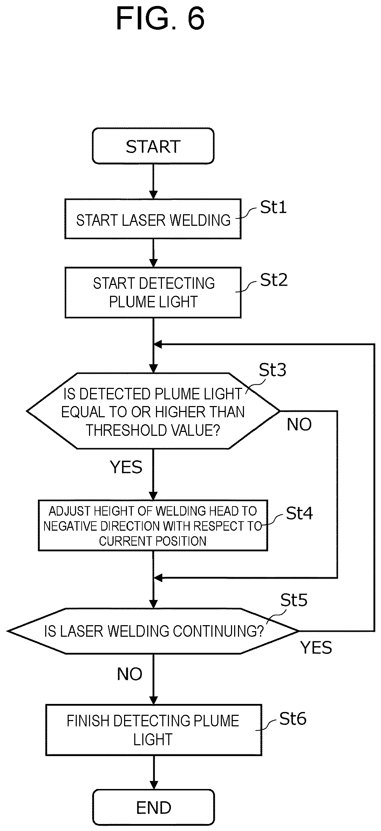

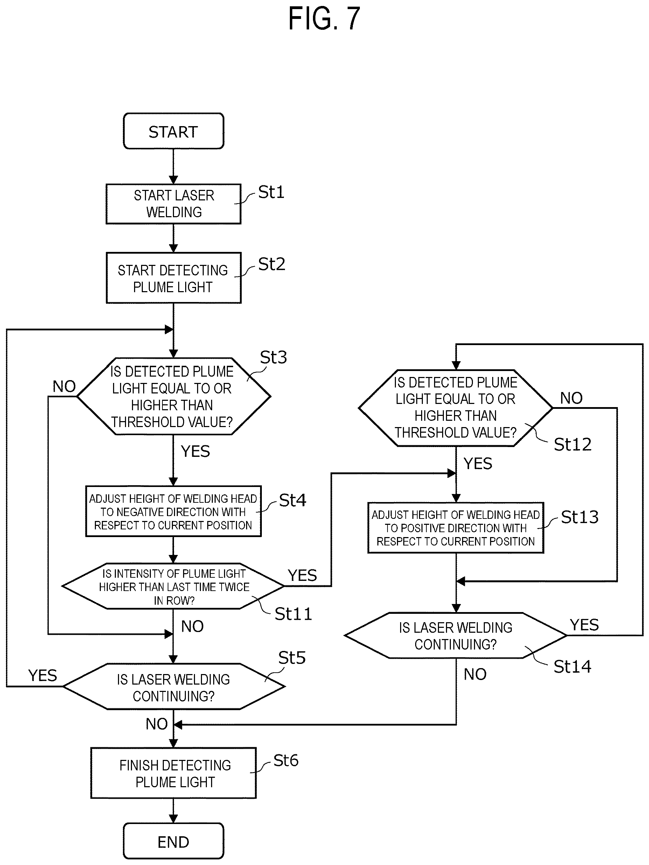

It is also known that, as illustrated in Fig. 5, plume light PLM1 is weakest at the focal position, and its intensity tends to increase as the position becomes offset further from the focal position. Therefore, when the intensity of plume light PLM1 exceeds threshold value TH1, laser welding device 100 determines that workpiece W is not irradiated with laser light LB appropriately, and controls the height of welding head 30 in the vertical direction so that the intensity of plume light PLM1 drops to a level lower than threshold value TH1 (see Fig. 6 or Fig. 7).

An operation sequence of this control will be explained later with reference to Fig. 6 and Fig. 7.

Control unit 71 controls the intensity (power density) at which laser light LB is output from laser oscillator 80, based on the laser welding program stored in storage unit 72. Control unit 71 transmits a position command to a servomotor (not illustrated) provided in manipulator 60, in accordance with the laser welding program stored in storage unit 72 and on a feedback signal from an encoder (not illustrated) included in manipulator 60, and controls the rotational speed and the amount of rotation of the servomotor (not illustrated).

Control unit 71 also controls the height of welding head 30 in the vertical direction that is a direction in parallel with the irradiation direction of laser light LB, based on a detection output (that is, plume light PLM1) received from sensor 40.

Display unit 73 displays an output status of laser oscillator 80, an operation status of manipulator 60, a warning, and the like, under control of control unit 71.

Manipulator 60 includes a servomotor (not illustrated) and an encoder (not illustrated) for each joint shaft (for example, each of four joint shafts in Fig. 1). Manipulator 60 is connected to controller 70, and moves welding head 30 so as to delineate a predetermined trajectory in accordance with the laser welding program described above, by operating the servomotors and the encoders corresponding to the respective joint shafts.

Operation sequences (a first operation sequence example and a second operation sequence example) of laser welding device 100 according to the first exemplary embodiment will now be explained with reference to Fig. 6 and Fig. 7. Fig. 6 is a flowchart illustrating an example of the first operation sequence of laser welding device 100 according to the first exemplary embodiment. Fig. 7 is a flowchart illustrating an example of the second operation sequence of laser welding device 100 according to the first exemplary embodiment. In the description of Fig. 7, the same step numbers are assigned to the steps that are the same as those in Fig. 6, and explanations of such steps are simplified or omitted, and differences therebetween will be explained.

In the first operation sequence, when the intensity of plume light PLM1 detected by sensor 40 during the laser welding is higher than or equal to threshold value TH1 included in characteristic data WPRP1 having been acquired based on the material or the like of workpiece W in advance, laser welding device 100 determines that the focal position of laser light LB has shifted, and moves the height of welding head 30 in the negative direction (that is, in the direction approaching the surface of workpiece W).

### (Example of First Operation Sequence)

In Fig. 6, controller 70 of laser welding device 100 starts laser-welding workpiece W (St1). Specifically, controller 70 causes laser oscillator 80 to generate laser light LB in accordance with the laser welding program, and irradiates the welded position of workpiece W with laser light LB, via optical fiber 90 and welding head 30. As explained earlier, as a result of this laser welding, plume light PLM1 is emitted from the welded position. Sensor 40 starts the detection of plume light PLM1 (starts receiving light) (St2), and transmits a sensed result of the intensity of the detected plume light PLM1 (an example of a detection output) to controller 70.

Controller 70 compares the intensity of plume light PLM1 received from sensor 40 with threshold value TH1 (see Fig. 5) stored in storage unit 72, to determine whether the intensity of plume light PLM1 is higher than or equal to threshold value TH1 (St3). If it is determined that the intensity of plume light PLM1 is lower than threshold value TH1 (St3, NO), it can be assumed that the focal position of laser light LB being output from welding head 30 is at an appropriate position, so that the processing of step St4 is skipped and the processing of laser welding device 100 goes to step St5.

By contrast, if it is determined that the intensity of plume light PLM1 is higher than or equal to threshold value TH1 (St3, YES), controller 70 performs control for adjusting the height of welding head 30 to the negative direction with respect to the current position (St4). In other words, because the intensity of plume light PLM1 is higher than or equal to threshold value TH1, laser welding device 100 assumes that the focal position of laser light LB being output from welding head 30 has shifted in a direction separating from the surface of workpiece W. Therefore, laser welding device 100 moves welding head 30 so that the height of welding head 30 is shifted to the negative direction with respect to the current position (that is, moves welding head 30 in the direction approaching the surface of workpiece W.)

If laser welding device 100 has not finished the laser welding of workpiece W yet (St5, YES), the processing of laser welding device 100 returns to step St3, and the processing of steps St3 to St5 is repeated until laser welding device 100 finishes the laser welding of workpiece W. In other words, laser welding device 100 continues detecting the intensity of plume light PLM1 using sensor 40 until the welding is finished, from when the laser welding of workpiece W is started in accordance with the laser welding program.

By contrast, if laser welding device 100 finishes laser-welding workpiece W (St5, NO), sensor 40 ends detecting plume light PLM1 (receiving light) (St6).

In this manner, when the intensity of plume light PLM1 from the welded position being irradiated with laser light LB during the laser welding of workpiece W is higher than or equal to threshold value TH1 included in characteristic data WPRP1 having been acquired (e.g., measured) based on the material or the like of workpiece W in advance, laser welding device 100 can adjust the height of welding head 30 in the negative direction. Therefore, laser welding device 100 can get a grasp of the amount by which the focal point has shifted due to the thermal lens effect or like that might take place during the laser welding, appropriately, and adjust the height of welding head 30 in such a manner that the intensity of plume light PLM1 is brought to a level lower than threshold value TH1. In this manner, it is possible to suppress the deterioration in the quality of the laser welding.

### (Example of Second Operation Sequence)

In an example of a second operation sequence, laser welding device 100 executes the following operation, in addition to the operation according to the first operation sequence. Specifically, when a phenomenon in which sensor 40 detects the intensity of plume light PLM1 higher than the immediately previously detected output during the laser welding occurs twice in a row, laser welding device 100 determines that the focal position of laser light LB has shifted downwards with respect to the surface of workpiece W, and moves the height of welding head 30 in the positive direction (that is, in the direction toward the surface of workpiece W from a level below the surface).

In Fig. 7, after moving welding head 30 in the negative direction in step St4, controller 70 determines whether the phenomenon in which the intensity of plume light PLM1 being performed continuously has marked a level higher than the immediately previously detected output has occurred twice in a row (St 11). If it is determined that the phenomenon of the intensity of plume light PLM1 marking higher than the immediately previously detected output has not occurred twice in a row (St 11, NO), the process of laser welding device 100 goes to step St5.

By contrast, if it is determines that the phenomenon of the intensity of plume light PLM1 marking higher than the immediately previously detected output has occurred twice in a row (St 11, YES), controller 70 performs control for adjusting the height of welding head 30 to the positive direction with respect to the current position (St 13). In other words, laser welding device 100 assumes that the amount of shift in the focal point of laser light LB has increased based on the increasing tendency in the intensity of plume light PLM1, although welding head 30 has been adjusted in the negative direction. Therefore, laser welding device 100 moves welding head 30 in the positive direction (that is, in the direction moving welding head 30 nearer to the surface of workpiece W but in the direction opposite to the negative direction) with respect to the current height of welding head 30.

If the laser welding of workpiece W by laser welding device 100 has not been finished (St 14, YES), the processing of laser welding device 100 returns to step St 12. In other words, controller 70 compares the intensity of plume light PLM1 received from sensor 40 with threshold value TH1 (see Fig. 5) stored in storage unit 72, to determine whether the intensity of plume light PLM1 is higher than or equal to threshold value TH1 (St12). If it is determined that the intensity of plume light PLM1 is lower than threshold value TH1 (St12, NO), it can be assumed that the focal position of laser light LB emitted from welding head 30 is at an appropriate position, so that the processing of step St13 is skipped and the processing of laser welding device 100 goes to step St14.

By contrast, if it is determined that the intensity of plume light PLM1 is higher than or equal to threshold value TH1 (St12, YES), controller 70 performs control for adjusting the height of welding head 30 to the positive direction (see above) with respect to the current position (St13). As a result, when a phenomenon in which the intensity of plume light PLM1 from the welded position irradiated with laser light LB while workpiece W is being laser-welded is higher than the immediately previously detected output occurs at least twice in a row, laser welding device 100 can adjust the height of welding head 30 in the direction opposite to the negative direction. Therefore, laser welding device 100 can get a grasp of the amount by which the focal point has shifted due to the thermal lens effect or like that might take place during the laser welding, appropriately, and adjust the height of welding head 30 in such a manner that the intensity of plume light PLM1 is brought to a level lower than threshold value TH1. In this manner, it is possible to suppress the deterioration in the quality of the laser welding.

Based on the above, laser welding device 100 according to the first exemplary embodiment includes: laser oscillator 80 with which an incoming end of optical fiber 90 is connected; welding head 30 that is connected to an outgoing end of the optical fiber and that performs laser welding while irradiating workpiece W with laser light LB by guiding laser light LB from laser oscillator 80 to workpiece W via optical fiber 90; sensor 40 that detects, during the laser welding, the intensity of plume light PLM1 that is based on the laser welding at a welded position at which workpiece W is irradiated with laser light LB; and controller 70 that controls a height of the welding head 30 based on a detection output from the sensor 40, the height being a height in a direction parallel with an irradiation direction of laser light LB.

As a result, laser welding device 100 can always acquire the intensity of plume light PLM1 emitted from the welded position irradiated with laser light LB during the laser welding, and can get a grasp of the amount by which the focal point has shifted during the laser welding, appropriately, based on the intensity. Therefore, laser welding device 100 can adjust the height of welding head 30 in such a manner that the intensity of plume light PLM1 is brought to an appropriate level, so that the degradation in the quality of the laser welding can be suppressed without increasing working hours of laser welding.

In laser welding device 100, controller 70 includes a memory (e.g., storage unit 72) that stores therein, for each of workpieces including workpiece W, characteristic data WPRP1 of the intensity of plume light PLM1 corresponding to the focal position of laser light LB. Controller 70 controls the height of welding head 30 based on the detection output from sensor 40 and characteristic data WPRP1. As a result, laser welding device 100 can determine whether the focal position of laser light LB has shifted, appropriately, based on the intensity of plume light PLM1, using the characteristic of the intensity of plume light PLM1 corresponding to the focal position acquired for the material or the like of workpiece W in advance.

Furthermore, sensor 40 is disposed near welding head 30. As a result, because plume light PLM1 is emitted upwards from the welded position toward welding head 30, sensor 40 can sense the intensity of plume light PLM1 accurately.

When it is determined that the detection output from sensor 40 is higher than or equal to threshold value TH1 of the intensity of plume light PLM1 corresponding to workpiece W, controller 70 adjusts the height of welding head 30 in a direction approaching nearer to workpiece W than the current position. In this manner, when the intensity of plume light PLM1 from the welded position being irradiated with laser light LB during the laser welding of workpiece W is higher than or equal to threshold value TH1 included in characteristic data WPRP1 having been acquired (e.g., measured) based on the material or the like of workpiece W in advance, laser welding device 100 can adjust the height of welding head 30 in the negative direction. Therefore, laser welding device 100 can get a grasp of the amount by which the focal point has shifted due to the thermal lens effect or like that might take place during the laser welding, appropriately, and adjust the height of welding head 30 in such a manner that the intensity of plume light PLM1 is brought to a level lower than threshold value TH1. In this manner, it is possible to suppress the deterioration in the quality of the laser welding.

When it is determined that the detection output from sensor 40 is higher than the immediately previous detection output from sensor 40 at least twice in a row, controller 70 adjusts the height of welding head 30 in a direction approaching nearer to workpiece W than the current position. As a result, when a phenomenon in which the intensity of plume light PLM1 from the welded position irradiated with laser light LB while workpiece W is being laser-welded is higher than the immediately previously detected output occurs at least twice in a row, laser welding device 100 can adjust the height of welding head 30 in the direction opposite to the negative direction. Therefore, laser welding device 100 can get a grasp of the amount by which the focal point has shifted due to the thermal lens effect or like that might take place during the laser welding, appropriately, and adjust the height of welding head 30 in such a manner that the intensity of plume light PLM1 is brought to a level lower than threshold value TH1. In this manner, it is possible to suppress the deterioration in the quality of the laser welding.

While various exemplary embodiments have been described in the foregoing with reference to the drawings, it is obvious that the present disclosure is not limited thereto. The invention is defined by the scope of the appended claims.

### INDUSTRIAL APPLICABILITY

The present disclosure is useful as a laser welding device and a laser welding method for getting a grasp of the amount by which the focal point has shifted during laser welding, without increasing working hours for laser welding, and for suppressing deterioration in the quality of laser welding.

### REFERENCE MARKS IN THE DRAWINGS

- 30: welding head
- 40: sensor
- 50: shielding gas supplying device
- 60: manipulator
- 70: controller
- 71: control unit
- 72: storage unit
- 73: display unit
- 80: laser oscillator
- 90: optical fiber
- 100: laser welding device
- LB: laser light
- W: workpiece

## Claims

1. A laser welding device (100) comprising:
a laser oscillator (80) with which an incoming end of a fiber (90) is connected;
a welding head (30) that is connected to an outgoing end of the fiber (90) and that performs laser welding while irradiating a workpiece (W) with laser light (LB) by guiding the laser light from the laser oscillator (80) to the workpiece (W) via the fiber (90);
a sensor (40) that detects, during the laser welding, an intensity of plume light that is based on the laser welding, the plume light being emitted from a welded position at which the workpiece (W) is irradiated with the laser light (LB); and
a controller (70) that controls a height of the welding head (30) based on a detection output from the sensor (40), the height being a height in a direction parallel with a direction that the laser light (LB) is emitted,
wherein the controller (70) includes a memory (72) that stores therein, for each of workpieces including the workpiece (W), characteristic data of the intensity of the plume light at a focal position of the laser light (LB),
**characterized in that**
when the controller (70) determines that the detection output from the sensor (40) is higher than or equal to a threshold value of the intensity of the plume light corresponding to the workpiece (W), the controller (70) adjusts the height of the welding head (30) in a negative direction, which is a direction approaching nearer to the workpiece (W) than a current position, based on the detection output from the sensor (40) and the characteristic data, and
when the controller (70) determines that the detection output from the sensor (40) is higher than an immediately previous detection output from the sensor (40) at least twice in a row, the controller (70) adjusts the height of the welding head (30) in a positive direction, which is a direction opposite to said negative direction, based on the detection output from the sensor (40) and the characteristic data.

2. A laser welding method comprising:
performing laser welding while irradiating a workpiece (W) with laser light by causing a welding head (30) to guide the laser light (LB) emitted from a laser oscillator (80) with which an incoming end of a fiber (90) is connected, to the workpiece (W), the laser light (LB) being emitted via an outgoing end of the fiber (90);
detecting using a sensor (40), during the laser welding, an intensity of plume light that is based on the laser welding, the plume light being emitted from a welded position at which the workpiece (W) is irradiated with the laser light (LB); and
**characterized by**
a step of controlling, using a controller (70), a height of the welding head (30) based on a detection output from the sensor (40), the height being a height in a direction parallel with a direction that the laser light (LB) is emitted
wherein the controller includes a memory (72) that stores therein, for each of workpieces including the workpiece (W), characteristic data of the intensity of the plume light at a focal position of the laser light (LB),
and wherein the controller (70) is configured such that
when the detection output from the sensor (40) is higher than or equal to a threshold value of the intensity of the plume light corresponding to the workpiece (W), the controller (70) adjusts the height of the welding head (30) in a negative direction, which is a direction approaching nearer to the workpiece (W) than a current position, based on the detection output from the sensor (40) and characteristic data of the intensity of the plume light at a focal position of the laser light (LB), and
when the detection output from the sensor (40) is higher than an immediately previous detection output from the sensor (40) at least twice in a row, the controller (70) adjusts the height of the welding head (30) in a positive direction, which is a direction opposite to said negative direction, based on the detection output from the sensor (40) and the characteristic data.

## Patentansprüche

1. Laserschweißvorrichtung (100), umfassend:
einen Laseroszillator (80), mit dem ein Eingangsende einer Faser (90) verbunden ist;
einen Schweißkopf (30), der mit einem Ausgangsende der Faser (90) verbunden ist und der ein Laserschweißen durchführt, während er ein Werkstück (W) mit Laserlicht (LB) bestrahlt, indem er das Laserlicht von dem Laseroszillator (80) zu dem Werkstück (W) über die Faser (90) führt;
einen Sensor (40), der während des Laserschweißens eine Intensität von Plumelicht erfasst, die auf dem Laserschweißen basiert, wobei das Plumelicht von einer geschweißten Position emittiert wird, an der das Werkstück (W) mit dem Laserlicht (LB) bestrahlt wird; und
eine Steuereinrichtung (70), die eine Höhe des Schweißkopfes (30) auf der Grundlage einer Erfassungsausgabe von dem Sensor (40) steuert, wobei die Höhe eine Höhe in einer Richtung parallel zu einer Richtung ist, in der das Laserlicht (LB) emittiert wird,
wobei die Steuereinrichtung (70) einen Speicher (72) umfasst, der darin für jedes von Werkstücken einschließlich des Werkstücks (W) charakteristische Daten der Intensität des Plumelichts an einer Brennposition des Laserlichts (LB) speichert,
**dadurch gekennzeichnet, dass**
wenn die Steuereinrichtung (70) bestimmt, dass die Erfassungsausgabe von dem Sensor (40) höher als oder gleich einem Schwellenwert der Intensität des Plumelichts ist, der dem Werkstück (W) entspricht, die Steuereinrichtung (70) die Höhe des Schweißkopfes (30) in einer negativen Richtung anpasst, die eine Richtung ist, die sich dem Werkstück (W) näher als einer aktuellen Position annähert, auf der Grundlage der Erfassungsausgabe von dem Sensor (40) und der charakteristischen Daten, und
wenn die Steuereinrichtung (70) bestimmt, dass die Erfassungsausgabe von dem Sensor (40) mindestens zweimal hintereinander höher als eine unmittelbar vorhergehende Erfassungsausgabe von dem Sensor (40) ist, die Steuereinrichtung (70) die Höhe des Schweißkopfes (30) in einer positiven Richtung anpasst, die eine zu der genannten negativen Richtung entgegengesetzte Richtung ist, auf der Grundlage der Erfassungsausgabe von dem Sensor (40) und der charakteristischen Daten.

2. Laserschweißverfahren, umfassend:
Durchführen eines Laserschweißens, während ein Werkstück (W) mit Laserlicht bestrahlt wird, indem ein Schweißkopf (30) veranlasst wird, das Laserlicht (LB), das von einem Laseroszillator (80) emittiert wird, mit dem ein Eingangsende einer Faser (90) verbunden ist, zu dem Werkstück (W) zu führen, wobei das Laserlicht (LB) über ein Ausgangsende der Faser (90) emittiert wird;
Erfassen, unter Verwendung eines Sensors (40), während des Laserschweißens, einer Intensität von Plumelicht, die auf dem Laserschweißen basiert, wobei das Plumelicht von einer geschweißten Position emittiert wird, an der das Werkstück (W) mit dem Laserlicht (LB) bestrahlt wird; und
**dadurch gekennzeichnet, dass**
einen Schritt des Steuerns, unter Verwendung einer Steuereinrichtung (70), einer Höhe des Schweißkopfes (30) auf der Grundlage einer Erfassungsausgabe von dem Sensor (40), wobei die Höhe eine Höhe in einer Richtung parallel zu einer Richtung ist, in der das Laserlicht (LB) emittiert wird
wobei die Steuereinrichtung einen Speicher (72) umfasst, der darin für jedes von Werkstücken einschließlich des Werkstücks (W) charakteristische Daten der Intensität des Plumelichts an einer Brennposition des Laserlichts (LB) speichert,
und wobei die Steuereinrichtung (70) derart konfiguriert ist, dass
wenn die Erfassungsausgabe von dem Sensor (40) höher als oder gleich einem Schwellenwert der Intensität des Plumelichts ist, der dem Werkstück (W) entspricht, die Steuereinrichtung (70) die Höhe des Schweißkopfes (30) in einer negativen Richtung anpasst, die eine Richtung ist, die sich dem Werkstück (W) näher als einer aktuellen Position annähert, auf der Grundlage der Erfassungsausgabe von dem Sensor (40) und charakteristischer Daten der Intensität des Plumelichts an einer Brennposition des Laserlichts (LB), und
wenn die Erfassungsausgabe von dem Sensor (40) mindestens zweimal hintereinander höher als eine unmittelbar vorhergehende Erfassungsausgabe von dem Sensor (40) ist, die Steuereinrichtung (70) die Höhe des Schweißkopfes (30) in einer positiven Richtung anpasst, die eine zu der genannten negativen Richtung entgegengesetzte Richtung ist, auf der Grundlage der Erfassungsausgabe von dem Sensor (40) und der charakteristischen Daten.

## Revendications

1. Dispositif de soudage laser (100) comprenant :
un oscillateur laser (80) auquel est connectée une extrémité d'entrée d'une fibre (90) ;
une tête de soudage (30) qui est connectée à une extrémité de sortie de la fibre (90) et qui effectue un soudage laser tout en irradiant une pièce à usiner (W) avec une lumière laser (LB) en guidant la lumière laser depuis l'oscillateur laser (80) jusqu'à la pièce à usiner (W) via la fibre (90) ;
un capteur (40) qui détecte, pendant le soudage laser, une intensité de lumière de panache qui est basée sur le soudage laser, la lumière de panache étant émise depuis une position soudée à laquelle la pièce à usiner (W) est irradiée avec la lumière laser (LB) ; et
un dispositif de commande (70) qui commande une hauteur de la tête de soudage (30) sur la base d'une sortie de détection provenant du capteur (40), la hauteur étant une hauteur dans une direction parallèle à une direction dans laquelle la lumière laser (LB) est émise,
dans lequel le dispositif de commande (70) comprend une mémoire (72) qui stocke en son sein, pour chacune des pièces à usiner incluant la pièce à usiner (W), des données caractéristiques de l'intensité de la lumière de panache à une position focale de la lumière laser (LB),
**caractérisé en ce que**
lorsque le dispositif de commande (70) détermine que la sortie de détection provenant du capteur (40) est supérieure ou égale à une valeur seuil de l'intensité de la lumière de panache correspondant à la pièce à usiner (W), le dispositif de commande (70) ajuste la hauteur de la tête de soudage (30) dans une direction négative, qui est une direction se rapprochant de la pièce à usiner (W) par rapport à une position actuelle, sur la base de la sortie de détection provenant du capteur (40) et des données caractéristiques, et
lorsque le dispositif de commande (70) détermine que la sortie de détection provenant du capteur (40) est supérieure à une sortie de détection immédiatement précédente provenant du capteur (40) au moins deux fois de suite, le dispositif de commande (70) ajuste la hauteur de la tête de soudage (30) dans une direction positive, qui est une direction opposée à ladite direction négative, sur la base de la sortie de détection provenant du capteur (40) et des données caractéristiques.

2. Procédé de soudage laser comprenant :
la réalisation d'un soudage laser tout en irradiant une pièce à usiner (W) avec une lumière laser en faisant en sorte qu'une tête de soudage (30) guide la lumière laser (LB) émise depuis un oscillateur laser (80) auquel est connectée une extrémité d'entrée d'une fibre (90), jusqu'à la pièce à usiner (W), la lumière laser (LB) étant émise via une extrémité de sortie de la fibre (90) ;
la détection, à l'aide d'un capteur (40), pendant le soudage laser, d'une intensité de lumière de panache qui est basée sur le soudage laser, la lumière de panache étant émise depuis une position soudée à laquelle la pièce à usiner (W) est irradiée avec la lumière laser (LB) ; et
**caractérisé par**
une étape consistant à commander, à l'aide d'un dispositif de commande (70), une hauteur de la tête de soudage (30) sur la base d'une sortie de détection provenant du capteur (40), la hauteur étant une hauteur dans une direction parallèle à une direction dans laquelle la lumière laser (LB) est émise
dans lequel le dispositif de commande comprend une mémoire (72) qui stocke en son sein, pour chacune des pièces à usiner incluant la pièce à usiner (W), des données caractéristiques de l'intensité de la lumière de panache à une position focale de la lumière laser (LB),
et dans lequel le dispositif de commande (70) est configuré de telle sorte que
lorsque la sortie de détection provenant du capteur (40) est supérieure ou égale à une valeur seuil de l'intensité de la lumière de panache correspondant à la pièce à usiner (W), le dispositif de commande (70) ajuste la hauteur de la tête de soudage (30) dans une direction négative, qui est une direction se rapprochant de la pièce à usiner (W) par rapport à une position actuelle, sur la base de la sortie de détection provenant du capteur (40) et de données caractéristiques de l'intensité de la lumière de panache à une position focale de la lumière laser (LB), et
lorsque la sortie de détection provenant du capteur (40) est supérieure à une sortie de détection immédiatement précédente provenant du capteur (40) au moins deux fois de suite, le dispositif de commande (70) ajuste la hauteur de la tête de soudage (30) dans une direction positive, qui est une direction opposée à ladite direction négative, sur la base de la sortie de détection provenant du capteur (40) et des données caractéristiques.
